Europäisches Patentamt

European Patent Office

Office européen des brevets

(11) Numéro de publication: **0 176 416**
**A1**

## (12) DEMANDE DE BREVET EUROPEEN

(21) Numéro de dépôt: 85401728.2

(22) Date de dépôt: 05.09.85

(51) Int. Cl.4: **H04L 11/16**

(30) Priorité: 10.09.84 FR 8413849

(43) Date de publication de la demande:
02.04.86 Bulletin 86/14

(84) Etats contractants désignés:
BE DE GB IT NL SE

(71) Demandeur: **Société GIXI**
**Z.A. de COURTABOEUF Avenue de la Baltique -**
**B.P. 110**
**F-91944 Les Ulis Cedex(FR)**

(72) Inventeur: **Cour, Jean-Michel**
**99, rue de Paris**
**F-91400 Orsay(FR)**
Inventeur: **Fourel, Gérard**
**4, rue Raymond Lefevre**
**F-78390 Bois d'Arcy(FR)**
Inventeur: **Goalabre, Jean-Yves**
**24, Résdence "La Cerisaie"**
**F-91120 Palaiseau(FR)**
Inventeur: **Menard, Françoise**
**7, rue des Petites Ecuries Corbreuse**
**F-91410 Dourdan(FR)**
Inventeur: **Misson, Michel**
**Les Rives d'Allier 13, Avenue E. Herriot**
**F-63800 Cournon(FR)**
Inventeur: **Verbeck, Charles**
**41, Avenue Kennedy**
**F-91300 Massy(FR)**

(74) Mandataire: **Mongrédien, André et al**
**c/o SOCIETE DE PROTECTION DES INVENTIONS**
**25, rue de Ponthieu**
**F-75008 Paris(FR)**

(54) **Procédé et dispositif de transmission d'informations entre plusieurs stations reliées en série sur une boucle et application du procédé à la transmission de signaux vocaux numérisés et/ou de données.**

(57) L'invention concerne un procédé et un ensemble de transmission d'informations entre des stations émettrice-réceptrice (51, 52, 53, 54, 55) reliées en série sur une boucle.

Le procédé consiste, pour chaque station, à émettre des informations sous forme de micropaquets contenant outre des données, l'adresse propre de la station émettrice et l'adresse de destination de la station réceptrice de ces données ; à chaque instant le nombre de micropaquets ou la boucle est au plus égal au nombre de stations reliées par cette boucle ; chaque station dont l'adresse propre correspond à l'adresse de destination d'un micropaquet absorbe ce micropaquet sans le répéter sur la boucle, on répète un micropaquet sur la boucle lorsque l'adresse de destination du micropaquet ne correspond pas à l'adresse propre de la station considérée.

Application à la transmission de signaux vocaux numérisés et/ou de données résultant de traitements d'informations.

FIG.1

## PROCEDE ET DISPOSITIF DE TRANSMISSION D'INFORMATIONS ENTRE PLUSIEURS STATIONS RELIEES EN SERIE SUR UNE BOUCLE ET APPLICATION DU PROCEDE A LA TRANSMISSION DE SIGNAUX VOCAUX NUMERISES ET/OU DE DONNEES

La présente invention concerne un procédé et un dispositif de transmission d'informations entre plusieurs stations reliées en série sur une boucle, selon une configuration dite en anneau. Elle s'applique notamment à la transmission synchrone ou asynchrone entre plusieurs stations de signaux vocaux numérisés et/ou de données résultant de taitements d'informations.

La transmission de données sous forme numérique a de nombreuses applications bien connues dans des domaines tels que le traitement de l'information, le transport de textes, du son (téléphone) ou de l'image (vidéo numérique).

La présente invention permet le transport des données suivant les deux méthodes connues dans la technique sous l'appellation générique de "commutation de paquets" et de "commutation de circuits". Elle intervient notamment dans les réseaux connus dans la technique sous le nom générique de RITD (Réseau Intégrant les services de Téléphonie et de Données).

On identifie dans la technique connue différentes architectures de tels réseaux :

- Le premier type d'architecture est dit "en étoile". Ce type d'architecture correspond au cas où l'ensemble des raccordements élémentaires se fait sur un même élément physique central.

- Le deuxième type d'architecture physique que l'on peut distinguer est connu dans la technique sous le nom générique "d'architecture en bus".

- Le troisième type d'architecture physique est connu dans la technique sous le nom générique "d'architecture en anneau" ou "en boucle".

Ces trois types d'architectures connus et tels qu'ils sont exploités dans l'art antérieur, présentent des inconvénients que la présente invention permet de minimiser ou d'éliminer, comme on le verra plus loin en détail.

Le premier type d'architecture que l'on a distigué dans l'art antérieur (architecture "en étoile") présente un certain nombre d'inconvénients que l'on va résumer ci-après. La puissance de traitement nécessaire dans l'élément central, tel que connu dans l'état de la technique sous le sigle PABX (Private Access Branch Exchange ou autocommutateur téléphonique d'entreprise), induit un coût de base important. Ce coût ne résulte pas du nombre de raccordements que l'on veut effectuer dans l'immédiat, mais résulte essentiellement du nombre maximal de raccordements dont on souhaite pouvoir disposer.

La redondance nécessaire pour sécuriser ce type d'architecture nécessite des doublements de ressources dans l'élément central, ce qui multiplie le coût de l'installation. Cette architecture en étoile conduit à un câblage lourd de l'élément central, puisque rayonnent, depuis celui-ci, autant de liaisons directes point à point que de raccordements desservis ; ceci pose également des problèmes d'isolement électrique de tous ces points de raccordement, ainsi que des problèmes de limitation de distance entre le point de raccordement et l'élément central, cette limitation étant liée aux caractéristiques électriques de l'interface d'usager. La nécessité de reconfiguration d'un réseau en étoile (ajout de nouvelles stations, retrait de stations, changement de numéro) ne peuvent être effectuées à chaud (c'est-à-dire en fonctionnement) qu'au prix d'équipements et donc de coûts additionnels.

Le deuxième type d'architecture dite "architecture en bus" présente également un certain nombre d'inconvénients résultant de cette topologie d'installation, et résumés ci-après :

Les problèmes de ce second type d'architecture sont essentiellement liés à des contraintes physiques, car l'architecture en bus, pour desservir un nombre élevé de stations, impose un mode de transmission multipoints à fort débit. Le temps de propagation sur le support n'est alors pas du tout négligeable devant la durée d'un élément binaire d'information (bit) et peut induire des problèmes de discordance des horloges distribuées aux différents points de raccordement. La transmission à fort débit avec une grande dynamique induit également tous les problèmes connus génériquement sous le terme d'adaptation d'impédance et de contrôle automatique de gain.

En cas de panne de l'élément de commande d'un tel réseau, il est difficile de localiser la portion de ligne de transmission en dérangement car celle-ci ne comporte pas de repères identifiables automatiquement.

Dans ce second type d'architecture, on rencontre des problèmes d'isolement électrique des points de raccordements, du même genre que ceux déjà évoqués pour le premier type d'architecture.

Le troisième type d'architecture que l'on peut identifier dans l'art antérieur dit architecture en "anneau" présente vis-à-vis des deux autres précédemment examinés, un certain nombre d'avantages bien connus : Ce type de topologie permet tout d'abord de n'acheter initialement que des ressources proportionnées au nombre de points de raccordements dont on veut disposer effectivement, ce qui rend le coût de l'installation à peu près proportionnel au nombre de stations installées (et non au nombre maximum prévu).

Avec ce type de topologie, le nombre de stations sur l'anneau n'est pas limité par des lois physiques, il n'y a qu'une limite logique qui est le nombre de stations que l'on est capable de distinguer par des moyens d'adressage appropriés.

La reconfiguration de l'anneau en cours de fonctionnement, est aisée : des réalisations connues dans l'art antérieur ont suffisamment montré qu'il était facile d'ajouter ou de retirer une station avec des perturbations minimes. L'architecture en anneau a pour autre avantage connu d'exploiter le support de transmission reliant deux stations successives en point à point et dans un seul sens de transmission (simplex). Le mode de transmission point à point simplex est physiquement beaucoup plus simple que le mode multipoints (notamment pour les problèmes, évoqués précédemment, d'adaptation d'impédance et de dynamique).

De plus, on peut transmettre des informations différentes sur chacune des liaisons point à point au même instant, ce qui permet une utilisation optimale de la bande passante de l'ensemble des lignes de transmission point à point.

Un autre avantage résultant de la topologie en anneau est que, lorsque l'on établit une communication duplex entre deux stations, le trafic entre ces deux stations est véhiculé respectivement pour chaque sens de transmission dans chacune des deux moitiés de l'anneau délimitée par les deux stations en communication. Ceci permet d'utiliser une partie de la bande passante du support de transmission qui ne représente que la moitié du débit de la communication duplex.

L'architecture en anneau présente en outre moins de limitations de distance que les deux autres précédemment examinées car bien qu'il existe toujours des limitations physiques (électriques) de la longueur de chaque liaison point à point, il est toujours possible de rajouter une station sur l'anneau qui se comporte comme un "répéteur" additionnant ainsi les longueurs des deux liaisons point à point élémentaires (ou davantage).

Enfin on sait que la topologie en anneau permet d'utiliser des supports de transmission différents sur les différentes liaisons point à point. Ceci peut, à titre d'exemple, permettre de relier un certain nombre de stations par fibres optiques, dans le cas où une partie de l'anneau doit passer dans des lieux fortement bruités et/ou posant des problèmes d'isolement électrique.

L'architecture en anneau, malgré les avantages mentionnés ci-dessus présente un certain nombre d'inconvénients et notamment lorsque l'on souhaite utiliser cette architecture dans la technique RITD mentionnée plus haut.

En effet, les services offerts par la technique RITD sont les suivants :

- un service exploité en commutation de circuits applicable à la téléphonie (débit standard de 64 kilobits/seconde par exemple) ou aux données suivant le niveau de qualité recherché,

- un service de commutation de paquets, destiné au transport de données de type informatique,

- la facilité de transfert de signaux de commande de bout en bout,

- la distribution d'horloge assurant le synchronisme des sous-réseaux privés avec les réseaux publics.

Ces services sont offerts à l'usager sous forme de raccordement d'abonnés qui peuvent être, à titre d'exemple non limitatif, conformes aux interfaces connues dans la technique sous l'appellation générique "d'interface T" ou "interface S" (Draft du I431, I441, I451 du CCITT). Un objectif de l'invention est de créer une installation qui multiplie ces raccordements de type élémentaire. En ce sens l'invention peut être utilisée dans l'appellation générique de "régie d'abonnés", au sens des industries de télécommunications.

Les réalisations connues dans l'art antérieur, exploitant la topologie en anneau, présentent un certain nombre d'insuffisances et/ou d'inadaptations économiques.

On donnera ci-après trois exemples représentatifs des inconvénients de réseaux en anneau, connus :

- le réseau en anneau connu sous le nom de Cambridge-ring ne véhicule qu'un seul "mini paquet" d'informations à la fois sur l'anneau, ce qui a pour conséquence de limiter le débit de transmission ; de plus cette réalisation est impropre à distribuer une horloge commune sur les points de raccordement,

- la boucle IBM dite "Token ring" véhicule également une seule trame d'informations à la fois sur l'anneau, et comme la réalisation précédente, elle assure essentiellement des communications de type informatique (non synchrone). Elle n'est pas capable, sans artifices complexes, de transporter la parole qui nécessite des commutations synchrones,

- enfin, le réseau local connu sous le nom de Carthage, produit R6500 du Laboratoire Central de Télécommunication (LCT) 18-20 rue Grange Dame Rose 78141 Velizy-Villacoublay Cedex France répondant aux contraintes propres aux RITD exploite également une architecture en anneau.

Sur l'anneau circule à la fois une seule longue trame d'informations qui sont exploitées par des procédés du type multiplex à partage de temps, mieux adaptés que les précédents à la commutation de circuit. L'absence d'information explicite de routage des informations induit un dialogue complexe entre l'UCB (unité de contrôle de boucle) et les UCG (unité de contrôle de grappe ou de sous-réseau) sur lesquelles sont raccordés des terminaux. Un réseau de ce type connu sous le nom de réseau "Carthage" est conçu pour de grosses installations (plusieurs centaines de terminaux) où l'on peut correctement amortir les coûts initiaux des UCB et UCG ; il est d'un coût excessif pour la réalisation de petites installations (quelques dizaines de terminaux).

Les réseaux connus ne répondent donc pas totalement aux besoins des entreprises de taille petite ou moyenne notamment ; le développement de l'utilisation des mini et micro-ordinateurs dans les entreprises conduit celles-ci à s'équiper de réseaux locaux interconnectant l'ensemble de leurs machines, ce qui conduit ces entreprises à câbler un réseau interne pour véhiculer des données informatiques venant s'ajouter au réseau du téléphone. Dans l'état actuel de l'art antérieur, ces entreprises sont donc amenées à supporter le total des coûts d'installation et de maintenance d'au moins deux réseaux internes : leur réseau téléphonique et le ou leurs réseaux informatiques. Etant donné le prix de câblage dans un immeuble ou de la moindre modification de ce câblage, ces entreprises souhaiteraient évidemment faire coexister sur un seul et même réseau leurs communications téléphoniques et informatiques.

Il existe donc une demande pour un réseau intégrant les services de téléphonie et de données (RITD), de la part d'entreprises n'ayant pas toutes des dimensions leur permettant de s'équiper d'un réseau RITD de haut de gamme, tel que le réseau Carthage par exemple.

La présente invention, dans laquelle est utilisée une architecture en boucle ou anneau, a pour but de remédier aux inconvénients mentionnés plus haut, notamment pour ce type d'architecture, tout en répondant aux contraintes propres à la technique RITD en facilitant la mise en place sur la boucle de raccordements élémentaires de stations émettrices-réceptrices d'informations.

L'invention concerne tout d'abord un procédé de transmission d'informations entre plusieurs stations émettrices-réceptrices reliées en série sur une boucle, selon une configuration dite "en anneau", caractérisé en ce qu'il consiste pour chaque station, à émettre des informations sous forme de micropaquets contenant outre des données, l'adresse propre de la station émettrice et l'adresse de destination de la station réceptrice de ces données, à chaque instant le nombre de micropaquets sur la boucle étant au plus égal au nombre de stations reliées par cette boucle, chaque station dont l'adresse propre correspond à l'adresse de destination d'un paquet absorbant ce paquet sans le répéter sur la boucle, ou répétant un paquet sur la boucle lorsque l'adresse de destination dudit paquet ne correspond pas à l'adresse propre de la station considérée.

Selon une autre caractéristique de l'invention, l'une des stations dite de "régie" émettant des micropaquets d'informations à un rythme donné, le procédé consiste à provoquer l'émission de micropaquets respectifs par les autres stations, au même rythme donné, l'instant de réception par une station considéré d'un micropaquet provenant de la station précédant ladite station considérée sur la boucle synchronisant l'émission d'un micropaquet par ladite station considérée, vers la station suivant ladite station considérée sur la boucle.

Selon une autre caractéristique, le procédé consiste, pour l'une quelconque des stations, à se substituer à ladite station de régie, en cas d'absence accidentelle de réception de micropaquet, pour fixer à nouveau le rythme d'émission de micropaquets sur la boucle.

Selon une autre caractéristique, la station de régie fixant ledit rythme donné est synchronisée par une horloge externe à la boucle.

Selon une autre caractéristique, en l'absence pour une station donnée, d'un micropaquet à émettre ou à répéter vers une station suivante, ladite station donnée émet un micropaquet particulier de maintien dudit rythme.

L'invention a aussi pour objet un ensemble de transmission d'informations entre plusieurs stations émettrices-réceptrices reliées en série sur une boucle selon une configuration dite en "anneau", chacune de ces stations étant reliée à un terminal par une unité de raccordement et les informations circulant dans la boucle, toujours dans un même sens, caractérisé en ce que chacune des stations comprend une unité pour recevoir un à un des micropaquets d'informations provenant de la station précédente sur la boucle et une unité pour émettre un à un des micropaquets vers la station suivante sur la boucle, ces unités d'émission-réception étant reliées par un bus qui est aussi relié à l'unité de raccordement correspondante, chaque micropaquet contenant outre des données, l'adresse propre de la station émettrice et l'adresse de destination de la station réceptrice, le nombre de micropaquets présents à chaque instant sur la boucle étant au plus égal au nombre de stations reliées par la boucle, chaque station comprenant en outre des moyens automatiques à mémoires reliés audit bus pour absorber un micropaquet sans le répéter sur la boucle lorsque l'adresse de destination de ce micropaquet correspond à l'adresse propre de la station réceptrice, et pour répéter chaque micropaquet dont l'adresse de destination ne correspond pas à l'adresse propre de la station réceptrice.

Selon une autre caractéristique, lesdits moyens automatiques à mémoires comprennent pour chaque station une première mémoire fonctionnant selon le mode FIFO, reliée à l'unité de réception et au bus pour recevoir chaque micropaquet provenant de la station précédente, une deuxième mémoire fonctionnant selon le mode FIFO, reliée au bus pour recevoir des informations provenant de l'unité de raccordement correspondante, et une troisième mémoire fonctionnant selon le mode FIFO, reliée au bus pour transmettre des informations vers l'unité de raccordement correspondante, des sorties de la première mémoire étant reliées par le bus à la troisième mémoire ainsi qu'à l'unité d'émission correspondante, un automate étant relié aux première, deuxième et troisième mémoires pour grouper les informations par micropaquets classés en file d'attente dans chaque mémoire, cet automate comparant l'adresse de destination de chaque micropaquet de la première mémoire avec l'adresse propre de la station correspondante, pour permettre l'absorption de tout micropaquet dont l'adresse de destination correspond à l'adresse propre de la station correspondante et pour permettre la réémission de tout micropaquet dont l'adresse de destination ne correspond pas à l'adresse propre de la station correspondante, cet automate recevant des impulsions d'horloge fixant un rythme d'émission des micropaquets sur la boucle.

Selon une autre caractéristique, les impulsions d'horloge sont fournies par une horloge interne propre à chaque station.

Selon une autre caractéristique, les impulsions d'horloge sont fournies par une horloge asservie par une horloge externe à ladite boucle et commune à toutes les stations.

Les caractéristiques et avantages de l'invention ressortiront mieux de la description qui va suivre donnée en regard des figures schématiques annexées, sur lesquelles :

- la figure 1 représente schématiquement une configuration de stations reliées en anneau, selon la présente invention,

- la figure 2 représente l'enveloppe de la forme d'onde du signal correspondant à un micropaquet d'informations communiquées selon la présente invention,

- la figure 3 représente schématiquement un premier mode de réalisation de l'une des stations utilisée dans le procédé et l'ensemble de transmission de l'invention,

- la figure 4 représente un organigramme de fonctionnement d'un automate de commutation et de routage de micropaquets, utilisé dans le premier mode de réalisation représenté sur la figure 2,

- la figure 5 représente l'enveloppe de la forme d'onde du signal représentant un micropaquet d'informations communiquées selon un second mode de réalisation de l'invention,

- la figure 6 représente schématiquement un second mode de réalisation de l'une des stations utilisée dans l'invention, apte à effectuer des communications de type synchrone,

- la figure 7 représente un organigramme de fonctionnement d'un automate de commutation et de rou tage de micropaquets utilisé dans le second mode de réalisation de la figure 6,

- la figure 8 donne la courbe de réponse de l'asservissement en phase de l'horloge locale par l'horloge du réseau, - la figure 9 représente le graphe de fonctionnement de l'automate d'asservissement en phase, de l'horloge locale par l'horloge du réseau.

Pour mieux faire comprendre la présente invention, en évitant au maximum les ambiguïtés, un ensemble de définitions et d'explications préliminaires va être donné ci-dessous :

- Par réseau en boucle, on entend un certain nombre de stations reliées deux à deux par un support de transmission transportant l'information, agencé en forme d'anneau sur lequel l'information circule dans un seul sens. En ce qui concerne l'invention, le support de transmission entre deux stations peut être quelconque ; la seule contrainte est que sa bande passante soit suffisante pour la vitesse de transmission désirée.

- On entend par station un dispositif permettant de prélever et d'insérer des informations sur le réseau pour le compte d'au moins un appareil usager (terminal). Ces stations selon l'invention seront aussi désignées dans la suite de l'exposé, par le nom générique de "port".

- On entend par transport synchrone d'informations, le fait de distribuer à tous les terminaux connectés au réseau des impulsions d'horloges toutes synchronisées sur une horloge unique ainsi que le fait de délivrer et d'accepter les informations échangées avec les terminaux au rythme exact de ces horloges.

Dans la suite de l'exposé, on parlera indifféremment de transport synchrone d'informations sur un réseau, ou de transport d'informations sur un réseau synchrone.

On véhicule ainsi dans des réseaux synchrones :

- des impulsions d'horloge qui permettent de propager vers les terminaux une référence temporelle commune,

- des données : ce sont "les informations utiles" relatives aux communications en cours avec un ou plusieurs terminaux du réseau.

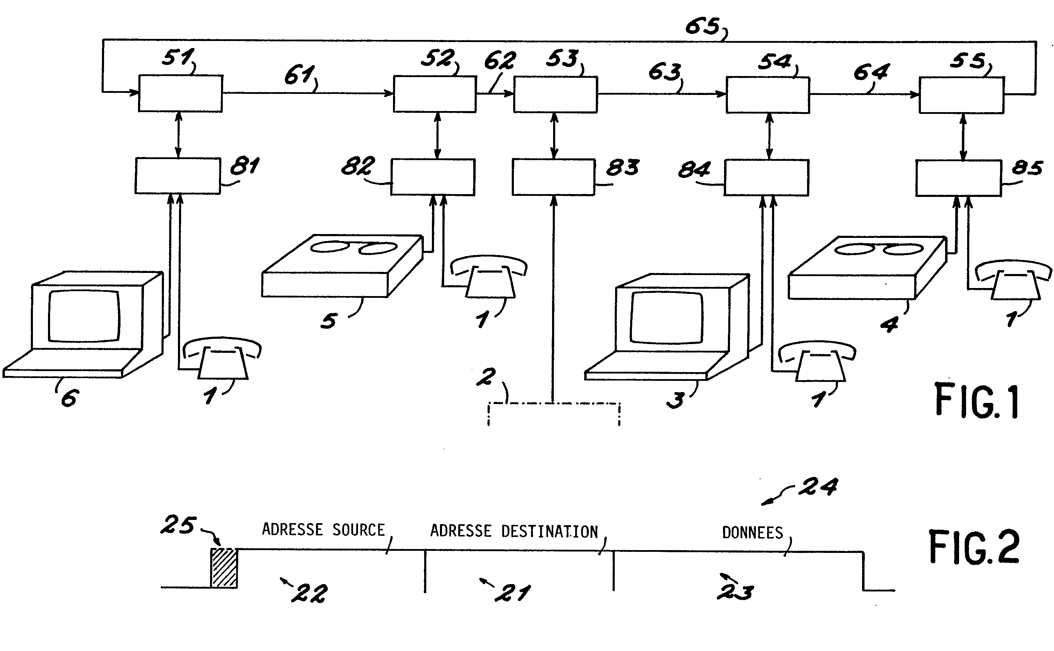

La figure 1 montre une régie d'abonnés de type RITD interconnectant des terminaux téléphoniques 1, un réseau public 2 et des terminaux de type informatique 3 et 4. Dans cette régie, l'architecture est répartie et ses différents éléments sont connectés en anneau. La régie est constituée de ports ou stations 51, 52, 53, 54, 55, reliés pas des câbles 61, 62, 63, 64, 65, constituant des liaisons point à point entre chaque couple de stations 51, 52 par exemple. A titre d'exemple non limitatif, les câbles 61, ..., 64, sont des câbles coaxiaux et les câbles 65 sont constitués par des fibres optiques. Les ports ou stations 51, ..., 55, sont reliés aux terminaux 1, 2, 3, 4, 5, 6 par des unités de raccordement 81, 82, 83, 84, 85, de tout type connu, réalisant l'adaptation d'interface entre les stations 51, ... 55, et les divers terminaux 1, 2, 3, 4, 5 et 6.

Les raccordements présentés à titre d'exemple sur la figure 1 mettent en relation des postes téléphoniques 1, une ligne d'accès au réseau téléphonique public 2 des postes de travail 3 composés respectivement d'un ordinateur notamment équipé d'un écran de visualisation et d'un clavier non référencé, des ordinateurs de traitement et d'archivage 4 notamment équipés de mémoire à disque de grande capacité et d'un système de gestion de base de données.

Lorsqu'un utilisateur d'un terminal de visualisation désire consulter les bases de données gé rées par les ordinateurs 4, il établit avec l'un de ceux-ci une communication de type paquet. Simultanément, il peut avoir une communication téléphonique avec un autre utilisateur de la régie, en établissant une communication de type circuit entre deux postes téléphoniques 1. Dans le même temps, un autre utilisateur peut établir une communication téléphonique avec un abonné du réseau public en établissant dans la régie une communication de type circuit, entre son terminal téléphonique 1 et le raccordement au réseau public 2.

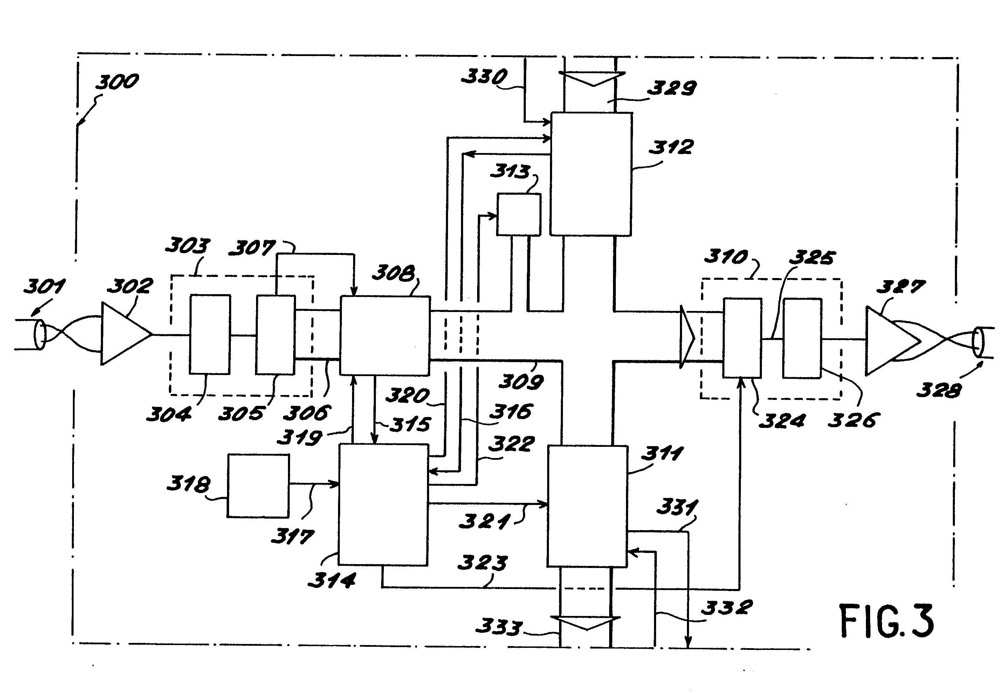

La figure 3 représente schématiquement un premier mode de réalisation d'une station 300 émettrice-réceptrice utilisée dans l'invention. La description qui va suivre a pour but de mieux faire comprendre la nature des moyens mis en oeuvre dans l'invention.

Le procédé de transport des informations sur le réseau en boucle de la présente invention, consiste à transmettre dans un mode série l'ensemble des informations dans de courtes trames, appelées dans la suite micropaquets. Ces micropaquets, présentés en figure 2, contiennent toutes les informations nécessaires à leur traitement et à leur routage par les stations de la boucle. Ces informations sont au moins les suivantes :

- un champ d'adresse 21 de la station destination,

- un champ d'adresse 22 de la station source,

- un champ de données 23 ayant la longueur d'un mot (typiquement un octet).

Bien qu'il existe de nombreux codes possibles, l'utilisation d'un code biphase (code Manchester par exemple), est envisagée dans le premier mode de réalisation de la station 300 représentée sur la figure 3. En conséquence, le micropaquet, désigné de façon générale par la référence 24, commence par un préambule sous forme d'un bit de repère ou de synchronisation unique 25, comme cela est classiquement utilisé dans les techniques de bandes magnétiques codées en phase.

Chaque station de la régie est définie par une adresse propre dont elle a l'exclusivité. On définit de plus dans le plan d'adressage de la régie, une adresse spéciale qui n'appartient en propre à aucune station du réseau, cette adresse permet la diffusion générale des informations. Toutes les stations absorbent l'information et la réémettent. La station qui a émis l'information (en diffusion générale), la détruit. Le format des micropaquets induit une grande simplicité de routage de ceux-ci par les stations, puisqu'à chaque élément de données sont associés ses éléments de commutation (adresse). La station destination est censée prélever l'information qui lui est destinée.

Chaque station assure quatre fonctions :

- répétition des micropaquets qui ne lui sont pas destinés,

- réception et retrait des micropaquets destinés à la station (et transmission des données aux terminaux qui lui sont connectés),

- destruction des micropaquets ayant effectué un tour complet de la boucle (c'est-à-dire des micropaquets émis par la station et non prélevés par la station destinataire),

- émission des micropaquets contenant les données émises par les terminaux connectés à la station considérée.

L'examen des champs adresse-source et adresse-destination d'un micropaquet reçu, suffit à une station pour décider s'il y a lieu de répéter ou de prélever le micropaquet reçu conformément aux règles suivantes :

1° - Les données émises par une station ont pour adresse de source, l'adresse propre de la station.

2° - Une station absorbe les données reçues lorsque l'adresse de destination de ces données est égale à l'adresse propre de cette station.

3° - Une station absorbe et détruit les données dont l'adresse source est égale à l'adresse propre de cette station.

4° - Une station réémet les données dont l'adresse de destination ne correspond pas à l'adresse propre de cette station.

On suppose bien entendu que les données sont groupées en micropaquets. La répétition des micropaquets non destinés à la station est prioritaire par rapport à l'émission des micropaquets contenant des données en provenance des terminaux connectés à cette station.

On va maintenant décrire de façon plus détaillée, la station de la figure 3. Les micropaquets entrent dans la station par le câble amont 301 (équivalent à l'un des câbles 61 à 64 de la figure 1). Ils sont reçus à travers un récepteur 302, pouvant être, à titre d'exemple non limitatif, un circuit du type connu dans la technique sous la référence MC3486 et commercialisé par la société Motorola. Les micropaquets passent ensuite dans l'unité de réception 303 comprenant notamment un circuit décodeur biphase 304, et un registre à décalage 305, constitué de deux circuits de la série TTL, connus sous la référence 74LS164, qui effectuent la conversion série parallèle du micropaquet reçu et le présentent sur le bus 308 où circule en parallèle le contenu des micropaquets (champ de source, champ de destination, champ de données). Une sortie 307 de l'unité de réception commande l'écriture dans la mémoire 308, de tout type connu, organisée suivant une structure de file d'attente (FIFO) par mots de 16 bits.

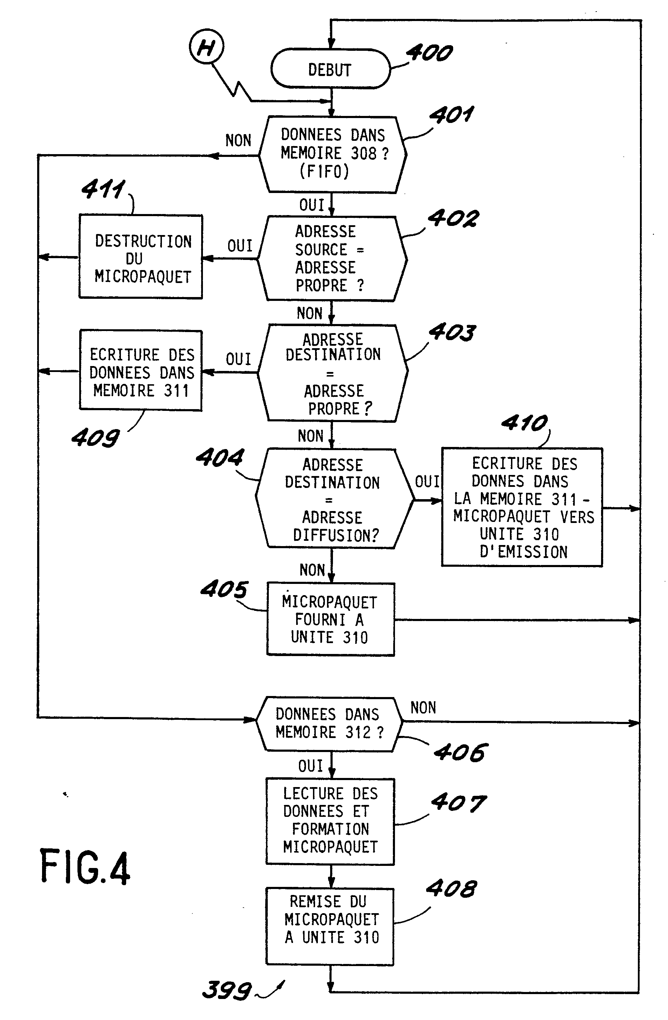

Le bus multiplex 309 relie la sortie de la mémoire FIFO 308, l'entrée de l'unité d'émission des micropaquets 310, l'entrée de la mémoire FIFO 311 où est rangé le contenu des micropaquets destinés à la station, la sortie de la mémoire FIFO 312 de réception des données en provenance des terminaux connectés à la station, afin de diriger les micropaquets reçus dans la mémoire 308 et d'émettre les données présentes dans la mémoire 312 et un dispositif d'encodage 313 de l'adresse propre de la station ; ce dispositif d'encodage est par exemple constitué d'amplificateurs de BUS du type 74LS244 dont les entrées sont portées à +5 Volts ou à la masse. Le bus 309 est géré par un automate 314 dont l'organigramme de traitement sera décrit avec la figure 4.

Les entrées gérées par cet automate sont :
- le bus 309,
- une ligne 315 d'état de la mémoire 308 précisant si cette dernière est vide ou non,
- une ligne 316 d'état de la mémoire 312 précisant si celle-ci est vide ou non,
- un signal d'horloge 317 émis par une horloge locale 318, réalisée suivant des techniques connues.

Les sorties de l'automate sont :
- une commande 319 de lecture de la mémoire 308,
- une commande 320 de lecture de la mémoire 312,
- une commande 321 d'écriture dans la mémoire 311,
- une commande 322 d'écriture de l'adresse propre 313,
- une commande 323 d'écriture dans le registre à décalage 324 de l'unité d'émission 310.

Ce registre à décalage, constitué de deux circuits de la série TTL de type 74LS165, effectue la conversion parallèle-série des micropaquets. Les micropaquets sont alors transmis par le fil 325 à un encodeur biphase 326. L'encodeur biphase 326 et le décodeur biphase 304 peuvent à titre d'exemple être des circuits connus sous la référence HD15531, commercialisé par Harris Semiconductor Products.

Les micropaquets sortant de l'encodeur biphase 326 sont transmis par l'émetteur 327, sur le câble aval 328. L'émetteur peut être à titre d'exemple non limitatif un circuit du type connu dans la technique sous la référence MC3487, commercialisé par Motorola. L'interface usager de la station est constitué de deux bus de 12 fils et de trois fils de commande des mémoires 311 et 318. L'usager émet ses données en présentant sur le bus parallèle 329 un octet de données et l'adresse destination de celui-ci, codée sur 4 bits. Il écrit ensuite ces informations par une impulsion sur la commande d'écriture 330 dans la mémoire 312 d'émission. L'usager peut tester s'il y a des données à lire dans la mémoire de réception 311 en testant l'état de la ligne 331 qui donne l'état vide ou non vide de la mémoire 311. Si la mémoire 311 n'est pas vide, il peut alors lire l'octet de donnée accompagné de l'adresse de la station qui l'a émis, par une impulsion sur la commande de lecture 332 de la mémoire 311. Cet octet de données et l'adresse de la station qui l'a émis, seront alors présents sur le bus parallèle 333.

L'organigramme 399 représenté sur la figure 4 peut être mis en oeuvre dans un réseau de décision logique figé, réalisable aisément par l'homme de l'art, avec un composant du type "Field Programmable logic Séquencer (F.P.L.S), connu sous la référence 82S105, commercialisé par la Société SIGNETICS. Le lancement de la phase 400 décrit sur la figure 4 est déclenché par un signal H, recueilli sur la commande 316. Ce signal est généré par les transitions des impulsions de l'horloge locale 317.,

Le procédé débute avec l'étape de branchement conditionnel 401 qui vérifie s'il y a des micropaquets présents dans la mémoire de réception 308 en testant l'état de la commande 314. Si la mémoire de réception 308 est vide, l'instruction de la branche 401 est dirigée vers la phase 406. Si la file de réception dans la mémoire 308 n'est pas vide, le micropaquet en tête de la file est lu dans la mémoire par une impulsion sur la sortie 318. A la phase 402, l'adresse source du micropaquet reçu est comparée avec l'adresse propre de la station dans un branchement conditionnel. Si l'adresse source est égale à l'adresse propre de la station, le traitement est dirigé vers la phase 411 où le micropaquet est supprimé car il s'agit d'un micropaquet émis par la station et qui n'a pas été réceptionné par la station destinataire. Après la phase 411, le traitement continue à la phase 406. Dans le cas où l'adresse source de micropaquet reçu est différente de l'adresse propre de la station, le traitement continue par le branchement conditionnel de la phase 403 où est vérifié si l'adresse destination du micropaquet reçu est égale à l'adresse propre de la station. S'il y a égalité des deux adresses, le traitement se poursuit à la phase 409 où l'adresse source du micropaquet et les données, sont écrites en queue de la file 311 par une impulsion sur la commande 320. Les terminaux connectés à la station viendront lire dans la mémoire 311 les micropaquets reçus et destinés à la station. Après la phase 409, le traitement se poursuit à la phase 406.

Si l'adresse destination du micropaquet n'est pas égale à l'adresse propre de la station, le traitement continu par le branchement conditionnel de la phase 404 où est testée l'égalité de l'adresse destination avec l'adresse de diffusion générale. En cas d'égalité, le traitement se poursuit avec la phase 410 où le micropaquet est remis à l'unité d'émission 310 par une impulsion sur la commande 321, afin d'être répété par la station, et où l'adresse source et les données du micropaquet sont écrites en queue de la file dans la mémoire 311 par une impulsion sur la commande 320. Le traitement reprend alors à la phase 400. Si l'adresse de destination du micropaquet n'est pas égale à l'adresse de diffusion, il y a lieu de répéter ce micropaquet qui n'est pas destiné à la station. Ceci est réalisé à la phase 405 qui fournit le micropaquet à l'unité d'émission 310, par une impulsion sur la commande 321. Le micropaquet est écrit dans le registre à décalage 322. Le traitement reprend alors à la phase 400.

A la phase 406, le traitement est un branchement conditionnel qui teste l'état de l'entrée 315 pour savoir s'il y a des informations à émettre, présentes dans la mémoire 312. Ces informations sont écrites dans la mémoire 312 par les terminaux ; elles sont composées d'un champ de données d'une longueur de un mot, accompagné de l'adresse de destination de ce mot de données.

Si la mémoire 312 est vide, le traitement reprend à la phase 400. Dans le cas où il y a des informations à émettre, le traitement se poursuit à la phase 408 où sont lues les données dans la mémoire 312, par une impulsion sur la commande 319 ; le micropaquet est obtenu par lecture de l'adresse propre de la station, par une impulsion sur la commande 322. Le micropaquet conforme à la première règle mentionnée plus haut est écrit à la phase 408, dans le registre à décalage 324 de l'unité d'émission 310, par une impulsion sur la commande 323.

De la description de ce premier mode de réalisation de la présente invention, il ressort qu'il peut y avoir sur l'anneau un nombre de micropaquets en transit sur les liaisons égal au nombre de stations présentes sur la boucle. Ceci permet une bonne utilisation du débit maximal des liaisons point à point de la boucle et apporte un facteur optimal d'occupation de la bande passante.

L'utilisation délibérée d'une partie importante de la bande passante pour véhiculer les adresses relatives à chaque mot simplifie le contrôle de la commutation (routage de l'information). La description de ce premier mode de réalisation selon l'invention, fait apparaître des horloges locales 318 d'émission des micropaquets. Ces horloges sont susceptibles d'avoir des dérivées importantes et d'entraîner des fluctuations non négligeables dans le rythme des impulsions d'horloges transmises aux terminaux et dans le rythme d'arrivée des micropaquets aux terminaux. De telles dérives sont acceptables dans des transmissions de données informatiques. Cette réalisation simplifiée se prête à des trafics de type asynchrone.

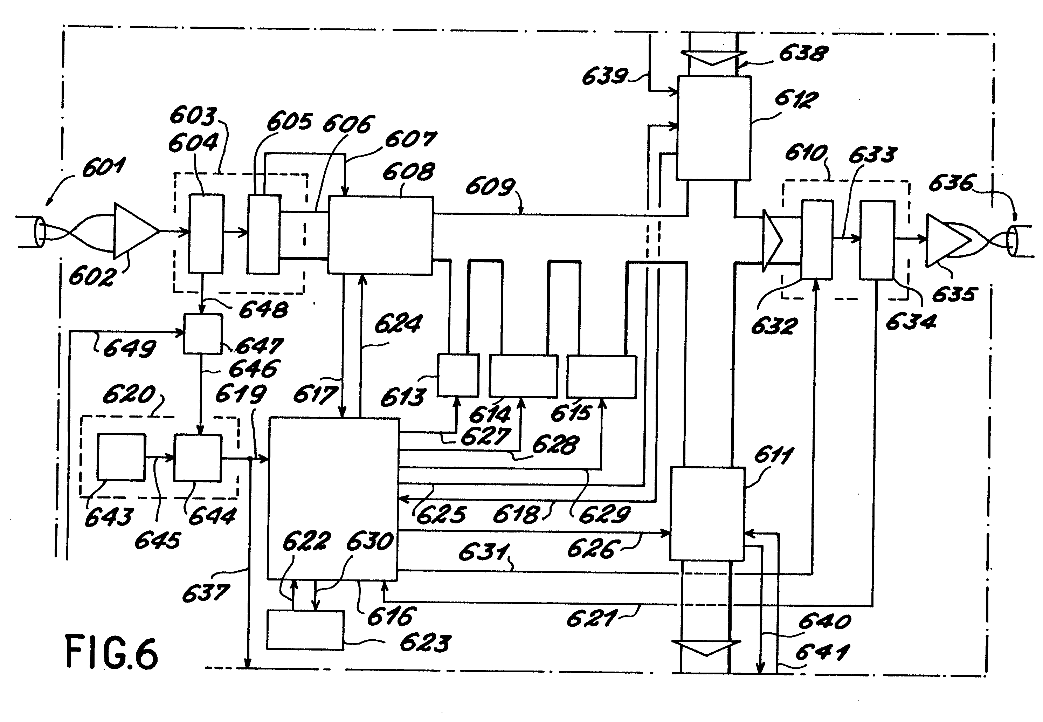

La figure 6 représente un second mode de réalisation d'une station de la présente invention, permettant en outre de fournir sur l'interface avec les terminaux de chaque station, des impulsions d'une horloge commune. Ceci permet dans l'invention de satisfaire aux contraintes des RITD, par une distribution des impulsions d'horloge rigoureusement synchronisées avec le réseau général.

La station décrite pour ce deuxième mode de réalisation de l'invention comprend des dispositifs supplémentaires prévus pour assurer en outre un trafic synchrone des données sur la boucle et des dispositifs prévus pour sécuriser ce trafic. Pour que les communications du type à commutation de circuits puissent se dérouler normalement, toutes les impulsions d'horloge des stations présentes sur le réseau, doivent être asservies en fréquence sur les impulsions d'une horloge unique. Cette horloge de référence est fournie par une station particulière de la boucle que nous désignerons dans la suite de l'exposé sous le nom de "régie". La régie est la station qui est raccordée au réseau public si ce raccordement est réalisé. Les autres stations seront désignées dans la suite de l'exposé sous le nom générique de "ports".

Si la régie est raccordée au réseau public, celle-ci synchronise son horloge avec celle fournie par le réseau public. En l'absence de raccordement avec le réseau public, c'est l'horloge locale fournie par la régie qui sert de référence pour l'ensemble des stations du réseau. La synchronisation de l'ensemble des stations est assurée par la circulation des micropaquets qui sont émis par chaque station à une cadence égale à la fréquence des impulsions d'horloge commune transmises entre les stations. Ainsi la détection de l'arrivée d'un micropaquet constitue, pour une station, un évènement de synchronisation. Donc, chaque port émet les micropaquets au rythme de leur réception et asservit son horloge locale sur les éléments de synchronisation reçus. Pour perpétuer l'élément de synchronisation, en l'absence d'information à transmettre sur le réseau, ces stations continuent d'émettre des micropaquets ne transportant pas d'informations utiles, appelés micropaquets de bourrage, dans la suite de l'exposé.

Un autre type de micropaquet est susceptible d'être émis sur la boucle par une station ; le micropaquet de diagnostic est émis par une station lorsque celle-ci ne reçoit plus de micropaquet, suite par exemple à une coupure du support de transmission. Ce micropaquet est émis en diffusion générale afin que toutes les stations soient informées de l'évènement. Il est émis au rythme de l'horloge locale de la station.

Dans la suite de l'exposé, nous distinguerons les différents types de micropaquets transportés par les appellations suivantes :

- les micropaquets de données qui véhiculent des informations échangées entre les terminaux connectés au réseau,
- les micropaquets de diagnostic,
- les micropaquets de bourrage (micropaquets qu'une station émet lorsqu'elle n'a rien à transmettre. Ce micropaquet est vide, il ne contient que les informations d'horloge).

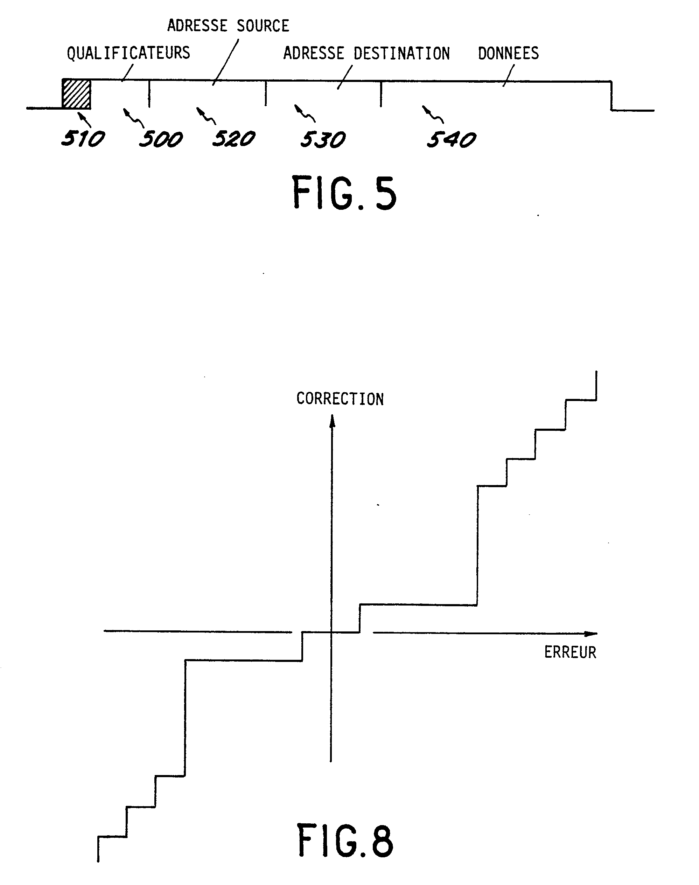

En conséquence, les micropaquets caractéristiques dans ce deuxième mode de réalisation de l'invention, possèdent une structure un peu différente de celle des micropaquets, présentés en figure 2, utilisés dans le premier mode de réalisation. En effet, il est nécessaire, dans ce deuxième mode de réalisation, de distinguer les différents types de micropaquets par une codification étendue. Le micropaquet adapté à cette réalisation, présenté en figure 5, possède un champ supplémentaire 50 utilisé à cet effet.

Ce micropaquet a la structure suivante :

- un préambule 510 sous forme d'un bit de repère,
- un champ de qualification 500 du micropaquet, qui permet de différencier les micropaquets de données, diagnostic et bourrage,
- un champ d'adresses 530 de la station de destination,
- un champ d'adresses 540 de la station source,
- un champ de données 550.

Dans cette réalisation, les stations ont les mêmes fonctions que dans la première réalisation déjà décrite ; elles effectuent le routage des micropaquets suivant les quatre mêmes règles. Le principe d'accès au réseau reste inchangé : priorité de la répétition des micropaquets non destinés à la station, sur l'émission des micropaquets contenant des données en provenance des terminaux connectés à cette station. Donc en accord avec ce principe, une station qui reçoit un micropaquet de bourrage peut le remplacer par un micropaquet de données, contenant des informations qu'elle avait à émettre.

Ce principe de priorité à la répétition des micropaquets non destinés à la station, ou diffusés à toutes les stations, impose un minimum de précautions pour éviter des problèmes d'engorgement du réseau.

La troisième règle de fonctionnement des stations qui impose le principe selon lequel toute station qui reçoit un micropaquet qu'elle a émis doit le détruire, ne suffit pas pour éviter tout risque de saturation par des micropaquets non absorbés. Par exemple, si on considère le cas d'un micropaquet destiné à la diffusion (adresse destination = adresse de diffusion générale), si son adresse source est modifiée par une erreur de transmission et si l'adresse source mise en place n'existe pas sur le réseau, le micropaquet va subsister et être diffusé indéfiniment sur le réseau. Sa durée de vie va dépendre d'une erreur de transmission ou de l'utilisation, comme adresse propre, de son adresse source. Un nombre de micropaquets égal au nombre de stations présentant ce type d'erreur suffit pour bloquer complètement le réseau. Pour pallier ce type d'engorgement, une fonction appelée purge est réalisée par les stations du réseau. Cette fonction est chargée de faire disparaître du réseau, un nombre de micropaquets consécutifs, au moins égal au nombre de stations présentes sur le réseau. (Ce nombre n'est pas limité par le principe de l'invention, la limitation réside uniquement dans la longueur des champs d'adresses).

Le nombre de micropaquets circulant sur le réseau, à un instant donné, est égal au nombre de stations réparties sur la boucle, car les tronçons de câbles ne sont pas suffisamment longs pour être considérés comme des mémoires. Les protocoles de communication vont éventuellement assimiler la purge à des erreurs de transmission, négligeables lorsqu'il s'agit de communications vocales, ou corrigées quand il s'agit de trafic par paquets.

Le deuxième mode de réalisation d'une station de l'invention va maintenant être décrit avec la figure 6. Les micropaquets entrent dans la station par le câble amont 601. Ils sont reçus à travers un récepteur 602 qui peut être par exemple un circuit du type MC3486 commercialisé par Motorola Semiconducteurs. Les micropaquets passent ensuite dans l'unité de réception 603 constituée notamment d'un circuit décodeur biphase 604 et d'un registre à décalage 605 constitué de 3 circuits de la série 74LS164 ;

ce registre effectue la conversion série parallèle du micropaquet reçu et le présente sur le bus 606 où circule en parallèle, le contenu des micropaquets (champ qualificatif, champ de source, champ de destination, champ de données). Il sort également de l'unité de réception une commande 607 d'écriture dans la mémoire 608, de tout type connu, organisée suivant une structure de file d'attente (FIFO), par mots de 18 bits par exemple.

Le bus multiplex 609 relie :
- la sortie de la mémoire 608,
- l'entrée de l'unité d'émission des micropaquets 610,
- l'entrée de la file d'émission des données, vers les terminaux, constituée d'une mémoire 611 de tout type connu, organisée suivant une structure de file d'attente (FIFO), par mot de 12 bits par exemple,
- la sortie de la mémoire 612, des données en provenance des terminaux, connectés à la station, organisée par mot de 12 bits,
- un dispositif d'encodage 613 de l'adresse propre de la station et du champ qualificatif de données d'un micropaquet, constituée d'une série de commutateur et d'un amplificateur de bus de type 74LS244 par exemple,
- un dispositif d'encodage 614 permettant de présenter sur les bus un micropaquet de bourrage, ce dispositif étant réalisé à l'aide d'amplificateurs de bus de type 74LS244, dont les entrées sont portées à +5 Volts ou à la masse,
- un dispositif d'encodage 615 permettant de présenter sur le bus un micropaquet de diagnostic, réalisé de façon semblable au dispositif 614.

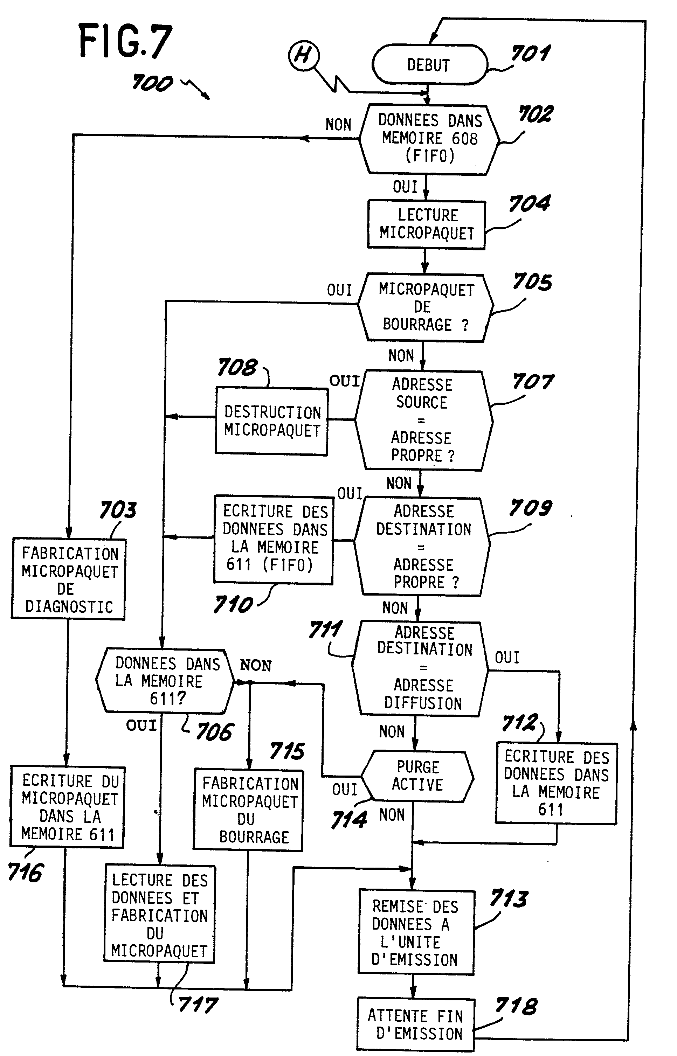

Le bus 609 est géré par un automate 616 dont l'organigramme de traitement est représenté sur la figure 7.

Les entrées gérées par cet automate sont :
- le bus 609,
- une ligne 617, d'état de la mémoire 608, précisant si cette dernière est vide ou non,
- une ligne 618 d'état de la mémoire 612, précisant si celle-ci est vide ou non,
- un signal d'horloge 619 emis par une horloge 620 synchrone avec le signal d'horloge du réseau,
- une ligne 621 sortant de l'unité d'émission et précisant s'il y a une émission en cours ou non,
- un signal 622 émis par un monostable 623, de tout type connu.

Les sorties gérées par l'automate sont :
- le bus 609,
- une liaison de commande 624 de lecture de la mémoire 608,
- une liaison de commande 625 de lecture de la mémoire 612,
- une liaison de commande 626 d'écriture dans la mémoire 611,
- une liaison de commande 627 de présentation de l'adresse propre sur le bus 605,
- une liaison de commande 628 de présentation d'un micropaquet de bourrage sur le bus 609,
- une liaison de commande 629 de présentation d'un micropaquet de diagnostic sur le bus 609,
- un liaison de commande 630 de déclenchement du monostable 623,
- une liaison de commande 631 d'écriture dans le registre à décalage 632 de l'unité d'émission des micropaquets 610 ; ce registre à décalage constitué de 3 circuits de type 74LS165, effectue la conversion parallèle série des micropaquets.

Les micropaquets sont alors transmis par le fil 631 à un encodeur biphase 634. L'endodeur biphase 634 et le décodeur biphase 604 étant par exemple un circuit de type HD15531 commercialisé par Harris Semiconductor Products.

Les micropaquets sortant de l'encodeur biphase 634 sont transmis par l'émetteur 635 sur le câble aval 625. L'émetteur peut être un circuit du type MC3487 commercialisé par Motorola. L'interface usager de la station est constitué de 12 lignes de données en entrée et 14 lignes de données en sortie, 3 fils de commande des mémoires 611 et 618, et un fil 637 véhiculant le signal d'horloge synchrone émis par l'horloge 620. L'usager émet ses données en présentant sur les fils d'entrée 638, un octet de données et l'adresse de destination de celui-ci codé sur 4 bits. Il écrit ensuite ces informations par une impulsion sur la commande d'écriture 639 dans la mémoire 612 d'émission. L'usager peut vérifier la présence de données à lire dans la mémoire de réception 611 en testant l'état de la ligne 640 qui donne l'état de la mémoire 611 : vide ou non vide. Si la mémoire n'est pas vide, il peut alors lire l'octet de données accompagné de l'adresse de la station qui l'a émis et des champs de qualification des micropaquets, par une impulsion appliquée sur la commande de lecture 641 de la mémoire 611. Cet octet de données et l'adresse de la station qui l'a émis, seront alors présents sur les sorties 642.

L'horloge 620 est composée d'une horloge locale rapide 643 réalisée suivant des techniques connues, et d'un automate 644, qui génère à partir de cette horloge rapide des impulsions d'horloge synchrones avec celles du réseau, propagées par les micropaquets.

Les entrées de l'automate 644 sont :
- le signal 645 émis par l'horloge rapide 643,
- un signal reçu sur le fil 646.

Ce signal peut provenir de deux sources différentes, selon que la station configurée est un port ou est la régie, commutable par un cavalier 647. Si la station est un port, le signal est recueilli sur la ligne 648. Lors de la détection du bit de repère débutant chaque micropaquet, l'unité de réception fournit une impulsion sur la ligne 648. Si la station est la régie, le signal sélectionné par le cavalier 647 est présent sur le fil 649. C'est alors le signal d'horloge fourni par le réseau public.

L'organigramme 700 représenté sur la figure 7, peut être mis en oeuvre dans un réseau de décision logique câblé, réalisable aisément par l'homme de métier avec un composant du type "Field Programmable Logic Sequencer" (FPLS) connu sous la référence 82S105, commercialisé par Signetics Corporation. Cet automate est cadencé par l'horloge rapide 643. Le lancement de la phase 701 est déclenché par le signal H, recueilli sur la commande 619. Ce signal est fourni par les transitions du signal d'horloge synchrone 620.

La phase commence avec l'étape de branchement conditionnel 702 qui vérifie s'il y a des micropaquets présents dans la mémoire de réception 608, en testant l'état de la commande 617. Si la mémoire de réception 608 est vide, le traitement continue par la phase 703. Si la mémoire de réception 608 n'est pas vide, le micropaquet en tête de file est lu par une impulsion sur la commande 622, à la phase 704. Ensuite la phase 705 teste si le micropaquet reçu est un micropaquet de bourrage. Si le micropaquet reçu est un micropaquet de bourrage, la phase suivante est la phase 706. Si ce n'est pas un micropaquet de bourrage, le traitement continue à la phase 707, où l'adresse source du micropaquet reçu est comparée à l'adresse propre de la station, dans un branchement conditionnel.

Si l'adresse source est égale à l'adresse propre de la station, le traitement continue à la phase 708 où le micropaquet est supprimé, car il s'agit d'un micropaquet émis par la station et qui n'a pas été réceptionné par la station destinataire. Après la phase 708, le traitement continue à la phase 706. Dans le cas où l'adresse source du micropaquet reçu est différente de l'adresse propre de la station, le traitement continue par le branchement conditionnel de la phase 709, où on vérifie si l'adresse de destination du micropaquet est égale à l'adresse propre de la station. S'il y a égalité des deux adresses, le traitement se poursuit à la phase 710 où le champ de qualification, le champ d'adresse source et le champ de données du micropaquet, sont écrits en queue de la file dans la mémoire 611, par une impulsion sur la commande 626. Le traitement continue ensuite à la phase 709. Si l'adresse destination du micropaquet n'est pas égale à l'adresse propre de la station, le traitement continue à la phase 711 où est vérifié si l'adresse destination est égale à l'adresse de diffusion générale. Si l'adresse de destination est égale à l'adresse de diffusion, le traitement se poursuit à la phase 712, où le champ qualificateur, le champ d'adresse source, et le champ de données du micropaquet sont écrits dans la mémoire 611 par une impulsion sur la commande 626. Le traitement continue alors à la phase 713.

Si l'adresse destination n'est pas égale à l'adresse de diffusion, le traitement continue à la phase 714 où est testé si la station doit effectuer une purge par examen de l'état de la commande 622. La purge est déclenchée par l'arrivée en fin de course du monostable 623 qui met à l'état actif la commande de purge. Cette commande reste à l'état actif pendant 16 périodes de l'horloge synchrone 620 qui correspond à l'arrivée de 16 micropaquets ; elle correspond à la non répétition, par la station, de micropaquets reçus qui sont remplacés par des micropaquets de bourrage. Après ces 16 périodes d'horloge durant lesquelles la purge était active, le monostable est réarmé par une impulsion sur la commande 630 et la commande de purge est mise à l'état inactif.

A la phase 714 de l'automate 700, si la purge n'est pas active, le traitement se poursuit à la phase 713 et si elle est active, le traitement se poursuit à la phase 715 où est présenté un micropaquet de bourrage sur le bus 609, par la validation de la commande 628 du pilote de bus 614, jusqu'à la fin de la phase 713.

La phase 703 consiste à écrire sur le bus un micropaquet de diagnostic destiné à signaler une coupure de ligne constatée par la détection d'un manque de micropaquets. Ceci est réalisé par une validation de la commande 629 du pilote de bus 615, jusqu'à la fin de la phase 713. Le traitement continue ensuite à la phase 716 où le champ de qualification, le champ d'adresse source et le champ de données sont écrits en queue de la file dans la mémoire 611, par une impulsion sur la commande 626. Le traitement continue alors à la phase 713.

La phase 706 permet de vérifier s'il y a des informations à émettre, présentes dans la mémoire 612, par test de l'état de l'entrée 618. Si la file de la mémoire 612 est vide, le traitement continue à la phase 715. S'il y a des informations présentes dans la mémoire 612, le traitement continue à la phase 717 où sont écrits sur le bus 609, le champ d'adresse de destination, le champ de données, par une impulsion de lecture de la mémoire 612, appliquée sur la commande 625. On écrit aussi sur le bus 609, l'adresse source de la station et le champ de qualification du micropaquet caractérisant un micropaquet de données, par la validation de la commande 627, jusqu'à la fin de la phase 713.

La phase 713 consiste à remettre à l'unité d'émission 610 le micropaquet présent sur le bus 609, par une impulsion d'écriture dans le registre à décalage 632, appliquée sur la commande 631. Cette impulsion déclenche également l'émission du micropaquet par l'encodeur biphase 634. Le traitement continue à la phase 718 où l'automate attend la fin de l'émission du micropaquet par test de l'état de l'entrée 621, avant de reprendre le traitement à la phase 701.

Dans la réalisation de l'automate 700, le délai est constant, entre le lancement du traitement déclenché par le signal d'horloge H recueilli sur la commande 619, et la phase 713 quels que soient les traitements effectués pour arriver à la phase 713. En conséquence le traitement d'un micropaquet par une station, est assimilable à un retard pur.

Le fonctionnement de l'automate 644, va être décrit de manière plus détaillée : dans les stations autres que la régie, appelées ports, l'automate a pour fonction de fournir un signal d'horloge synchrone avec la réception des micropaquets en provenance de la station amont. Cette horloge, synchrone avec l'arrivée des micropaquets, permet de synchroniser l'automate 616 de commutation et routage de micropaquets et, par conséquent, de réaliser un asservissement de l'émission des micropaquets, sur la réception de ceux-ci. L'automate 644 dans la régie, asservit le signal d'horloge qu'il fournit, avec le signal d'horloge du réseau public. Ainsi chaque station peut s'asservir sur un signal d'horloge qui provient de la station en amont, qui lui-même est asservi sur un signal d'horloge du réseau public dans le cas de la régie, ou sur le signal d'horloge de la station précédente, dans le cas d'un port. Ainsi, les différentes stations présentes sur la boucle, s'asservissent de proche en proche.

L'automate 644 peut être mis en oeuvre dans un réseau de décision logique câblé, réalisable facilement par l'homme de l'art avec un composant du type "Field Programmable Logic Sequencer" (FPLS) connu sous la référence 82S105, commercialisé par Signetics Corporation.

L'asservissement réalisé par l'automate 644, fournit un signal d'horloge de fréquence égale à la fréquence d'émission des micropaquets, par division du signal de l'horloge rapide 643 dont il recueille le signal sur le fil 645. Le signal d'horloge produit est asservi en phase par un signal de consigne recueilli sur le fil 646. L'erreur est donc donnée par comparaison de phases entre le signal d'horloge incident et le signal d'horloge asservi.

En régime établi, la comparaison de phases fournit une mesure de l'erreur qui dépend :
- des fluctuations des fréquences locales des impulsions délivrées par les différentes horloges rapides 643 des stations,
- de la dispersion du temps de montée des signaux sur le réseau,
- des corrections effectuées par la station amont, ou des fluctuations de fréquence du réseau public.

Si l'horloge du réseau public n'est plus fournie à la régie, le réseau doit se synchroniser sur une horloge locale fournie par cette régie. Dès que le signal d'horloge fourni par le réseau public est recueilli par la régie, l'horloge du réseau public doit se substituer à l'horloge locale délivrée par la régie. A la commutation des horloges de référence, l'erreur peut correspondre à un déphasage complet (erreur maximum), soit la moitié de la période. Ces erreurs sont relativement rares mais peuvent avoir une grande amplitude.

Ainsi, compte tenu du fait qu'il existe deux types de perturbations l'asservissement va réagir de deux façons différentes, suivant qu'il s'agit d'une erreur de faible ou de forte amplitude :

- correction élémentaire pour les faibles erreurs,

- correction égale à l'erreur au-delà d'un seuil,

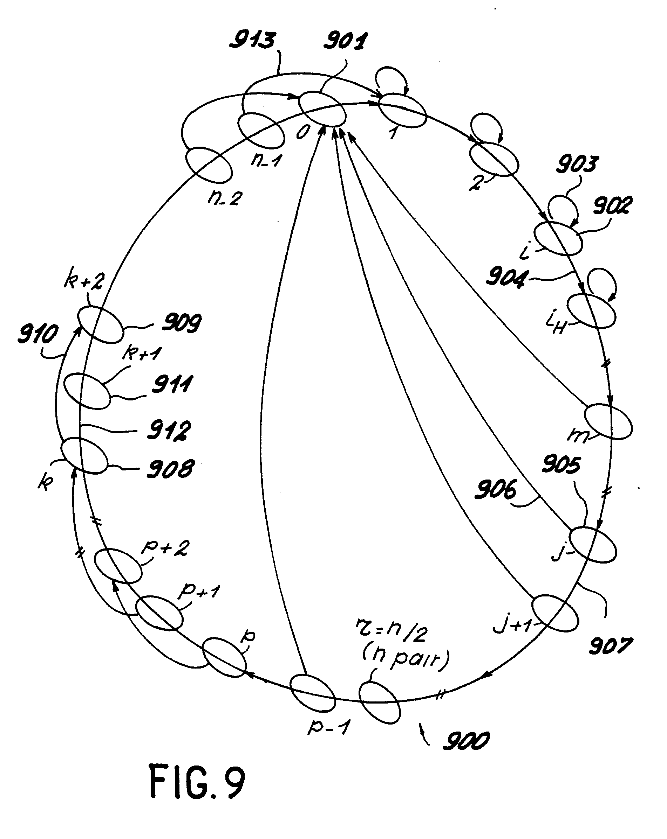

- pas de correction si le signal de consigne est absent (perte d'un micropaquet ou pas de signal d'horloge émis par le réseau public dans le cas de la régie). Une courbe de réponse caractéristique d'un tel asservissement est donnée en figure 8. L'automate d'asservissement 900 fonctionne selon le graphe de la figure 9. L'automate possède un nombre d'états égal au rapport de la fréquence de l'horloge rapide à la fréquence de l'horloge générée. Ce nombre est noté n. L'automate est cadencé par les transitions du signal de l'horloge 645. Il passe d'un état au suivant à chaque période de l'horloge rapide.

A l'état 0 (901) de l'automate, le signal de sortie passe de l'état bas à l'état haut (s'il n'y était pas déjà) et reste maintenu à l'état haut.

Les m premiers états numérotés de 0 à m-1 (où m est un nombre donné pour chaque asservissement), correspondent à une zone de correction unitaire (ceci pour une faible erreur de phase). Le fonctionnement de l'automate pour l'un de ces états est le suivant : à l'état i (902), si l'automate détecte un front montant sur le signal d'entrée 646 de consigne, l'horloge asservie est en avance de phase sur l'horloge incidente ; l'automate effectue alors une correction partielle de l'erreur de phase en restant dans le même état i pendant la période suivante de l'horloge rapide. Donc sur le front montant de l'horloge rapide, l'automate effectue la transition 903. Si à l'état i, l'automate n'a pas détecté de front montant sur le signal d'entrée de consigne 646, il passe à l'état i + 1 sur le front montant de l'horloge rapide, par la transition 904.

Les q états suivants (q = n-m-p) numérotés de m à p-1 (où p est un nombre donné pour l'asservissement), correspondent à une zone de correction immédiate de l'erreur de phase entre l'horloge asservie et l'horloge incidente.

Le fonctionnement de l'automate dans un de ces états est le suivant : si à l'état j (905), l'automate détecte un front montant sur le signal de consigne, il passe instantanément à l'état 0 par la transition 906. Si pendant le temps de l'état j, l'automate n'a pas détecté de front montant sur la consigne, il passe sur le front montant de l'horloge rapide, à l'état j + 1, par la transition 907.

A l'état r = n/2 de l'automate, le signal de sortie de l'automate passe de l'état haut à l'état bas et reste ensuite maintenu à l'état bas.

Les n-p derniers états de l'automate, numérotés de p à n-1, correspondent à une zone de correction unitaire de l'erreur de phase. Le fonctionnement de l'automate dans l'un de ces états est le suivant : à l'état k (908), si l'automate détecte un front montant sur l'entrée 646 de la consigne, l'horloge asservie est en retard de phase sur l'horloge incidente ; l'automate effectue donc une correction unitaire de l'erreur de phase en passant à l'état k + 2 (909), par la transition 910, lors d'un front montant de l'horloge rapide. Si pendant l'état k, l'automate n'a pas détecté de front montant sur l'entrée de la consigne 646, il passe à l'état k + 1 (911), par la transition 912, sur le front montant de l'horloge rapide.

Si à l'état n-1, l'automate détecte une erreur de phase et passe de l'état n-1 à l'état 1, en sautant l'état 0 par la transition 913, il change avant d'effectuer cette transition, l'état de la sortie, en la faisant passer de l'état bas à l'état haut.

**Revendications**

1. Procédé de transmission d'informations entre plusieurs stations émettrices-réceptrices (51, 52, 53, 54, 55) reliées en série sur une boucle, selon ne configuration dite "en anneau" caractérisé en ce qu'il consiste pour chaque station, à émettre des informations sous forme de micropaquets contenant outre un mot de données, l'adresse propre de la station émettrice et l'adresse de destination de la station réceptrice de ces mots de données, chaque station dont l'adresse propre correspond à l'adresse de destination d'un micropaquet absorbant ce micropaquet sans le répéter sur la boucle, ou répétant un micropaquet sur la boucle lorsque l'adresse de destination dudit paquet ne correspond pas à l'adresse propre de la station considérée, ou détruisant les micropaquets ayant effectué un tour complet de la boucle, la répétition des micropaquets non destinés à une station étant prioritaire par rapport à l'émission des micropaquets contenant des informations en provenance de terminaux connectés à ladite station, à chaque instant le nombre de micropaquets sur la boucle étant au plus égal au nombre de stations reliées par cette boucle.

2. Procédé selon la revendication 1, caractérisé en ce que l'une des stations (51, ou ..., 55) dite de régie émettant des micropaquets à un rythme donné, il consiste à provoquer l'émission de micropaquets respectifs par les autres stations, au même rythme donné, l'instant de réception par une station considérée d'un micropaquet provenant de la station précédant ladite station considérée sur la boucle synchronisant l'émission d'un micropaquet par ladite station considérée, vers la station suivant ladite station considérée sur la boucle.

3. Procédé selon la revendication 2, caractérisé en ce qu'il consiste, pour l'une quelconque des stations (51 à 55), à se substituer à ladite station de régie, en cas d'absence accidentelle de réception de micropaquet, pour fixer à nouveau le rythme d'émission de micropaquets sur la boucle.

4. Procédé selon la revendication 2, caractérisé en ce que la station de régie fixant ledit rythme donné est synchronisée par une horloge externe à la boucle.

5. Procédé selon la revendication 2, caractérisé en ce qu'en l'absence pour une station donnée, d'un micropaquet à émettre ou à répéter vers une station suivante, ladite station donnée émet un micropaquet particulier de maintien dudit rythme.

6. Application du procédé conforme à l'une quelconque des revendications 3, 4, 5, à la transmission de signaux vocaux numérisés et/ou de données résultant de traitements d'informations.

7. Ensemble de transmissions d'informations entre plusieurs stations émettrices-réceptrices (51 à 55) reliées en série sur une boucle selon une configuration dite en "anneau", chacune de ces stations (51 à 55) étant reliée à au moins un terminal (1 ou 2, ... ou 6) par une unité de raccordement (81 ou 82, ... ou 85) et les informations circulant dans la boucle, toujours dans un même sens, caractérisé en ce que chacune des stations comprend une unité (302, 303 ou 602, 603) pour recevoir un à un des micropaquets d'informations provenant de la station précédente sur la boucle et une unité (310, 327 ou 610, 635) pour émettre un à un des micropaquets vers la station suivante sur la boucle, ces unités d'émission-réception étant reliées par un bus (309 ou 609) qui est aussi relié à l'unité de raccordement (81 ou ... 85) correspondante, chaque micropaquet contenant outre un mot de données, l'adresse propre de la station émettrice et l'adresse de destination de la station réceptrice, chaque station comprenant en outre des moyens automatiques à mémoires (308, 311, 312, 314, 318 ou 608, 612, 641, 616, 620...) reliés audit bus pour absorber un micropaquet sans le répéter sur la boucle lorsque l'adresse de destination de ce micropaquet correspond à l'adresse propre de la station réceptrice, pour répéter chaque micropaquet dont l'adresse de destination ne correspond pas à l'adresse propre de la station réceptrice, ou pour détruire les micropaquets ayant effectué un tour complet de la boucle, la répétition des micropaquets non destinés à une station étant prioritaire par rapport à l'émission des micropaquets contenant des informations en provenance des terminaux connectés à ladite station, le nombre de micropaquets présents à chaque instant sur la boucle étant au plus égal au nombre de stations reliées par la boucle.

8. Ensemble de transmission selon la revendication 7, caractérisé en ce que lesdits moyens automatiques à mémoires comprennent pour chaque station une première mémoire (308 ou 608) fonctionnant selon le mode FIFO, reliée à l'unité de réception et au bus pour recevoir chaque micropaquet provenant de la station précédente, une deuxième mémoire (312 ou 612) fonctionnant selon le mode FIFO, reliée au bus pour recevoir des informations provenant de l'unité de raccordement correspondante, et une troisième mémoire (311 ou 611) fonctionnant selon le mode FIFO, reliée au bus pour transmettre des informations vers l'unité de raccordement correspondante, les sorties de la première mémoire (308 ou 608) étant reliées par le bus (309 ou 609) à la troisième mémoire (311 ou 611) ainsi qu'à l'unité d'émission correspondante (310, 327 ou 610, 635), un automate (314 ou 616) étant relié aux première, deuxième et troisième mémoires pour grouper les informations par micropaquets classés en file d'attente dans chaque mémoire, cet automate comparant l'adresse de destination de chaque micropaquet de la première mémoire (308 ou 608) avec l'adresse propre de la station correspondante, pour permettre l'absorption de tout micropaquet dont l'adresse de destination correspond à l'adresse propre de la station correspondante et pour permettre la réémission de tout micropaquet dont l'adresse de destination ne correspond pas à l'adresse propre de la station correspondante, cet automate recevant des impulsions d'horloge fixant un rythme d'émission des micropaquets sur la boucle.

9. Ensemble de transmission selon la revendication 8, caractérisé en ce que les impulsions d'horloge sont fournies par une horloge interne (318) propre à chaque station.

10. Ensemble de transmission selon la revendication 8, caractérisé en ce que les impulsions d'horloge sont fournies par une horloge (620) asservie par une horloge externe à ladite boucle et commune à toutes les stations.

**FIG.1**

**FIG.2**

ADRESSE SOURCE   ADRESSE DESTINATION   DONNEES

FIG.3

FIG.4

QUALIFICATEURS ADRESSE SOURCE ADRESSE DESTINATION DONNEES

*510* *500* *520* *530* *540*

# FIG. 5

CORRECTION

ERREUR

# FIG.8

FIG.6

FIG.7

0 176 416

700

701 — DEBUT

H

702 — DONNEES DANS MEMOIRE 608 (FIFO) — NON

OUI

704 — LECTURE MICROPAQUET

705 — MICROPAQUET DE BOURRAGE ? — OUI

NON

708 — DESTRUCTION MICROPAQUET

707 — ADRESSE SOURCE = ADRESSE PROPRE ? — OUI

NON

710 — ECRITURE DES DONNEES DANS LA MEMOIRE 611 (FIFO)

709 — ADRESSE DESTINATION = ADRESSE PROPRE ? — OUI

NON

703 — FABRICATION MICROPAQUET DE DIAGNOSTIC

711 — ADRESSE DESTINATION = ADRESSE DIFFUSION — OUI

NON

706 — DONNEES DANS LA MEMOIRE 611? — NON

OUI

712 — ECRITURE DES DONNEES DANS LA MEMOIRE 611

716 — ECRITURE DU MICROPAQUET DANS LA MEMOIRE 611

715 — FABRICATION MICROPAQUET DU BOURRAGE

714 — PURGE ACTIVE — OUI

NON

713 — REMISE DES DONNEES A L'UNITE D'EMISSION

717 — LECTURE DES DONNEES ET FABRICATION DU MICROPAQUET

718 — ATTENTE FIN D'EMISSION

18

FIG. 9

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-2 379 953 (ALSTHOM-ATLANTIQUE) * Page 1, ligne 30 - page 3, ligne 10; page 6, ligne 5 - page 7, ligne 30; page 8, lignes 17-25; page 9, lignes 24-35 * | 1,7,8 | H 04 L 11/16 |
| A | | 2 | |
| | --- | | |
| X | AFIPS CONFERENCE PROCEEDINGS. NATIONAL COMPUTER CONFERENCE, 16-19 mai 1983, pages 729-733, Arlington, US; J.A. HERNANDEZ et al.: "A high-throughput interconnection structure" * Page 731, colonne de droite, ligne 32 - page 733, colonne de gauche, ligne 5 * | 1,7-9 | |
| | --- | | DOMAINES TECHNIQUES RECHERCHES (Int. Cl.4) |
| X | US-A-4 321 703 (SIEMENS) * Colonne 1, ligne 42 - colonne 2, ligne 8; colonne 2, ligne 24 - colonne 3, ligne 24 * | 1 | H 04 L |
| A | | 7,8 | |
| | --- | | |
| A | US-A-4 468 734 (LANIER et al.) * Colonne 2, lignes 5-50; colonne 5, lignes 18-40 * | 1-6 | |
| | ---     -/- | | |

Le présent rapport de recherche a été établi pour toutes les revendications

| Lieu de la recherche | Date d'achèvement de la recherche | Examinateur |
|---|---|---|
| LA HAYE | 10-12-1985 | GERLING J.C.J. |

Office européen
des brevets

**RAPPORT DE RECHERCHE EUROPEENNE**

Numéro de la demande

EP 85 40 1728

Page 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | INTERNATIONAL CONFERENCE ON COMMUNICATIONS, 14-17 mai 1984, pages 915-918; Amsterdam, NL; R. YATSUBOSHI et al.: "Flexible network synchronization technology for ring networks" * En entier * | 1,2,4, 9,10 | |

- - - - -

DOMAINES TECHNIQUES
RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 10-12-1985 | GERLING J.C.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82